Europäisches Patentamt

European Patent Office

Office européen des brevets

(11) Numéro de publication: **0 368 721**
**A1**

## DEMANDE DE BREVET EUROPEEN

(21) Numéro de dépôt: 89402992.5

(22) Date de dépôt: 30.10.89

(51) Int. Cl.5 **F16G 5/06**

(30) Priorité: 07.11.88 FR 8814484

(43) Date de publication de la demande:
16.05.90 Bulletin 90/20

(84) Etats contractants désignés:
**BE DE ES GB IT NL SE**

(71) Demandeur: HUTCHINSON S.A. une Société
Anonyme dotée d'un Conseil de
Surveillance et d'un Directoire
2, rue Balzac
F-75008 Paris(FR)

(72) Inventeur: Simon, Jean-Michel
86, rue de Châtillon
F-92190 Clamart(FR)
Inventeur: Zarife, Victor
La Loge - Château de Varenne
F-45220 St Germain-des-Prés(FR)

(74) Mandataire: Ores, Irène et al
CABINET ORES 6, Avenue de Messine
F-75008 Paris(FR)

(54) Courroie de transmission de puissance du type trapézoidal.

(57) Courroie de transmission de puissance du type trapézoïdal comprenant un corps formé d'une matrice en élastomère dans laquelle est noyée une couche de câblés en matières textiles, naturelles ou synthétiques, servant de support de traction, avec des renforts à base de filaments dirigés sensiblement transversalement par rapport à la courroie.

Les renforts (28) sont des joncs rigides composites en fibres de verre enrobées de résine époxy disposés exclusivement dans la partie de dos de la courroie, laquelle est limitée latéralement par deux faces (22, 23) en dépouille pour éviter tout contact desdits renforts avec les flasques des poulies avec lesquelles coopère la courroie.

Application : transmission de puissances élevées par exemple pour boîtes de vitesses ou variateurs à transmission variable du domaine automobile.

FIG.1

## COURROIE DE TRANSMISSION DE PUISSANCE DU TYPE TRAPEZOIDAL

L'invention a pour objet une courroie de transmission de puissance du type trapézoïdal.

Elle vise, en particulier, une telle courroie à flancs nus propre à être utilisée en tant qu'organe de transmission de puissance élevée, par exemple, dans des ensembles de boîte de vitesses ou de variateurs mécaniques d'automobiles.

Les courroies connues pour ce genre d'application, - qui comportent un crantage transversal sur leur face interne lorsque des caractéristiques spéciales de flexibilité de la courroie sont recherchées ou dans certaines réalisations prévues pour de faibles diamètres d'enroulement -, doivent supporter pendant des durées importantes différents états de contrainte, présenter un haut module d'élasticité en traction, un faible module d'élasticité en flexion et une résistance mécanique transversale élevée. Cette dernière condition est particulièrement importante étant donné que, en l'absence de rigidité transversale suffisante, la courroie peut s'incurver lors de son fonctionnement, sa section droite gauchir sous la pression des flasques des poulies avec lesquelles elle coopère et ainsi cesser de jouer son rôle de transmission de puissance. Pour éviter cet inconvénient, on a déjà proposé d'augmenter la rigidité transversale desdites courroies, par exemple par l'adjonction au mélange caoutchouteux constitutif de la matrice de courtes fibres uniformément dispersées et orientées pour la plupart dans le sens transversal de la courroie, de façon à obtenir un mélange anisotrope ayant un module plus élevé dans le sens transversal que dans le sens longitudinal, ou radial. Dans une telle solution, toutefois, la valeur de la rigidité transversale qui peut être obtenue est limitée par le fait que la proportion de fibres courtes naturelles ou synthétiques ne peut dépasser environ 30% en volume, valeur au-delà de laquelle on aboutit rapidement à une perte de la cohésion de l'ensemble matrice caoutchoutique-fibres.

Aussi, d'autres propositions ont-elles été avancées pour accroître la rigidité transversale de telles courroies et, notamment, dans EP-A-0109990, l'introduction de renforts constitués par des éléments en filaments s'étendant sensiblement totalement en travers de la courroie de part et d'autre de l'armature longitudinale, c'est-à-dire à la fois dans la partie de la courroie qui travaille en compression (intérieur) et celle qui travaille en traction (dos). La rigidité transversale nécessaire à la bonne tenue en compression de la courroie est alors obtenue mais au détriment de la souplesse longitudinale indispensable pour qu'elle puisse supporter sans endommagement, par rupture de la cohésion à l'interface des renforts et de la matrice d'élastomère, les flexions auxquelles elle est soumise au cours de l'utilisation. En outre, la multiplication des renforts accroît le coût et les difficultés de fabrication, d'une part, tandis que, d'autre part, le contact sur les flancs de la courroie desdits renforts et des flasques de poulie provoquent la création de zones hétérogènes, de caractéristiques physiques très différentes en particulier quant à leurs coefficients de frottement. Cette différence de coefficients de frottement perturbe la transmission et engendre des zones d'échauffement localisé qui entraînent l'endommagement de l'élastomère constitutif de la matrice par fissuration de celui-ci avec, pour résultat, une diminution sensible de la cohésion de l'ensemble et par suite de la durée de vie et des caractéristiques de telles courroies.

A partir de cet état de la technique, la Demanderesse s'est donnée pour but de fournir une courroie du type de celles mentionnées ci-dessus, c'est-à-dire dans laquelle la rigidité transversale est obtenue à l'aide de renforts à base de filaments mais qui ne présente pas les inconvénients des dispositifs de l'art antérieur connus.

C'est, en particulier, un but de l'invention de fournir une telle courroie qui permette la transmission de puissances élevées sans, toutefois, qu'il ne soit porté atteinte à sa souplesse longitudinale.

C'est, encore, un but de l'invention de fournir une telle courroie dont la durée de vie soit aussi grande, sinon plus, que celle des courroies antérieurement connues.

C'est, aussi, un but de l'invention de fournir une telle courroie dont la fabrication puisse être réalisée sans difficultés, et de manière sensiblement analogue à celle des courroies connues, de sorte qu'elle n'entraîne pas la création d'outils et/ou d'appareillages spéciaux et de coût élevé.

Une courroie du type trapézoïdal selon l'invention, comprenant un corps formé d'une matrice en élastomère dans laquelle est noyée une couche de câblés en matières textiles, naturelles ou synthétiques servant de support de traction, avec des renforts à base de filaments dirigés sensiblement transversalement par rapport à la courroie est caractérisée en ce que lesdits renforts sont des joncs composites rigides en fibres de verre enrobées de résine époxy disposés exclusivement dans la partie de dos de la courroie, laquelle est limitée latéralement par deux faces en dépouille qui évitent tout contact des renforts et des flasques des poulies avec lesquelles coopère la courroie.

Les renforts ou joncs dont le diamètre est avantageusement compris entre 0,5 et 3 mm sont placés dans le dos de la courroie de manière à ménager des épaisseurs de matériau élastomère suffisantes pour que ne soit pas mise en cause la cohésion mécanique de la matrice.

Celle-ci est avantageusement constituée par un mélange de caoutchouc dans lequel sont noyées des fibres courtes et, pour éviter en raison de la présence desdites fibres que n'apparaissent et ne se propagent des micro-fissures, la face externe de même que la face interne de la courroie sont de préférence revêtue chacune d'un tissu, du type de ceux utilisés pour de telles courroies, c'est-à-dire un tissu caoutchouté à un ou plusieurs plis, à base de coton et ou d'autres fibres naturelles, et ou de fibres synthétiques.

Dans une réalisation préférée, la partie intérieure de la courroie, - c'est-à-dire celle qui par rapport à la couche de câblés est la plus proche de l'axe des poulies avec lesquelles coopère la courroie -, est conformée suivant un crantage transversal.

Pour encore accroître la souplesse de la courroie et lui permettre, notamment, de s'enrouler sur des poulies de faible diamètre, l'invention prévoit complémentairement de ménager un crantage transversal sur le dos de la courroie, c'est-à-dire la partie de celle-ci qui travaille en traction et qui est tournée vers l'extérieur par rapport à la couche de câblés qui constitue, en quelque sorte, le lieu des fibres neutres.

Une telle disposition réduit en outre les contraintes en flexion qui pourraient résulter d'une épaisseur trop importante du dos.

Tout en étant disposés dans la partie de dos exclusivement, les joncs rigides en fibres de verre enrobées de résine époxy peuvent être répartis suivant une ou, en variante, des couches distinctes. Dans ce dernier cas, les joncs d'une couche sont avantageusement décalés par rapport aux joncs d'une autre couche, et ainsi suivant une disposition quelque peu en quinconce.

L'invention sera mieux comprise par la description qui suit, faite à titre d'exemple et en référence au dessin annexé, dans lequel:

- la figure 1 est une vue partielle, en perspective, d'une courroie selon l'invention, pour une première forme de réalisation;

- la figure 2 est une vue en coupe transversale de la courroie et d'une poulie avec laquelle elle coopère;

- la figure 3 est une vue analogue à celle de la figure 1, mais pour une variante;

- la figure 4 est une vue analogue à la figure 1 mais pour encore une autre courroie.

Une courroie de type trapézoïdal à flancs nus selon l'invention, 10, est prévue comme organe de transmission de puissance entre un organe menant et un organe mené constitué(s) l'un et/ou l'autre par une poulie 11 d'axe A à flasques 12, 13, fixes ou mobiles en translation et qui appartiennent à un ensemble mécanique comme une boîte de vitesses ou un variateur à rapports de transmission variables susceptible de trouver application dans le domaine de l'industrie automobile.

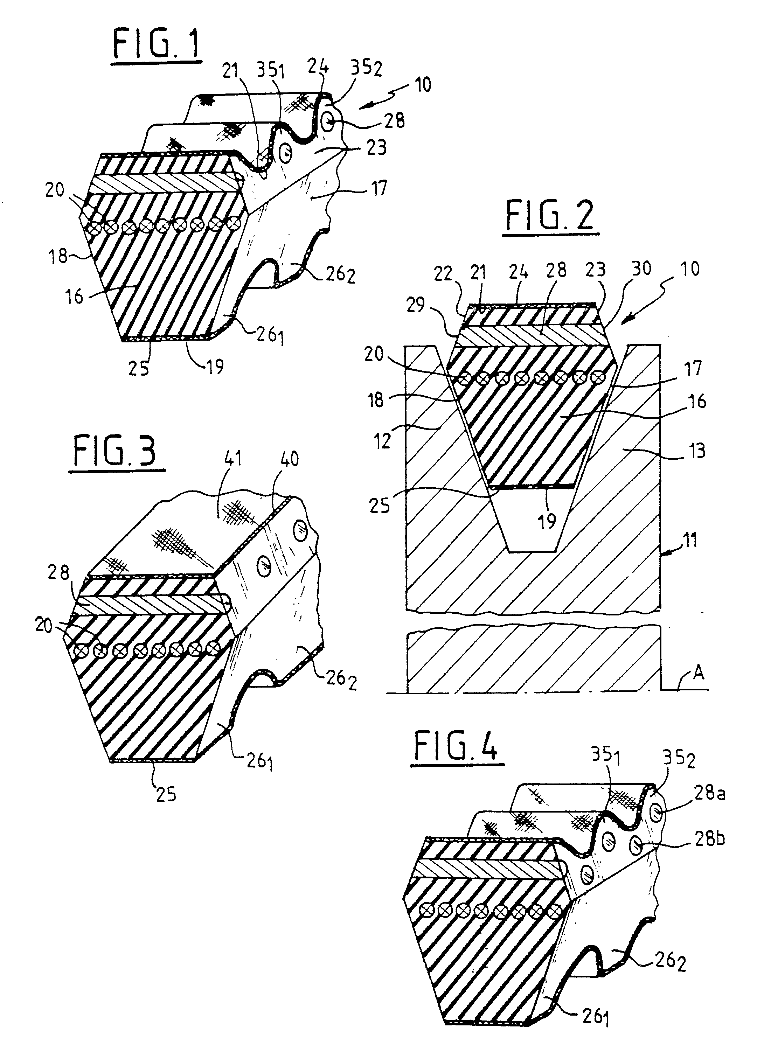

Dans la forme de réalisation illustrée sur les figures 1 et 2, la courroie 10 comprend une matrice 16 en matériau élastomère, comme du caoutchouc synthétique, par exemple du polychloroprène dans lequel sont noyées de courtes fibres de type aramide, fibres de verre ou de cellulose destinées à accroître la résistance aux efforts de compressions latéraux. La section droite de la courroie, à flancs nus 17 et 18, est comme montrée sur les figures 1 et 2, c'est-à-dire à contour hexagonal résultant de l'accolement par leurs bases de deux trapèzes isocèles limitant l'un une partie intérieure de la courroie et l'autre son "dos". De façon plus précise, la partie intérieure (la plus proche de l'axe A en condition d'utilisation) règne entre les flancs 17, 18, la face interne 19 et une nappe ou couche de câblés 20, servant de support de traction et qui peut être constituée à partir de fils en matière synthétique comme des fils de polyester, d'aramide, de verre ou de rayonne, tandis que le dos de la courroie règne entre ladite couche de câblés 20, la face externe 21 et deux faces latérales 22, 23, en dépouille.

La face externe 21 est garnie d'une ou de plusieurs couche(s) de tissu caoutchouté 24, par exemple à base de coton enduit de polychloroprène, et la face interne 19 est elle aussi garnie d'un tissu caoutchouté 25 analogue au tissu 24 pour éviter que n'apparaissent et ne se propagent des micro-fissures de fatigue en raison de la charge en fibres de la matrice 16.

Dans la réalisation illustrée sur la figure 1, la partie intérieure de la courroie est découpée suivant des crans $26_1$, $26_2$... etc... qui lui donnent de la souplesse et permettent son enroulement sur des poulies 11 de faible diamètre.

Que la partie intérieure soit crantée ou non, l'invention prévoit de conférer à la courroie la rigidité transversale nécessaire à son bon fonctionnement et à la transmission de la puissance voulue, à l'aide de renforts 28 constitués par des joncs rigides en matériau composite à base de fibres de verre enrobées de résine époxy, disposés dans le dos de la courroie, exclusivement, et transversalement à celle-ci.

Les joncs 28, dont le diamètre est avantageusement compris entre 0,5 et 3 mm, sont de préférence régulièrement espacés dans le sens longitudinal de la courroie et leur longueur est sensiblement égale à la largeur du dos de la courroie, les extrémités longitudinales 29 et 30 desdits joncs affleurant les faces latérales 22 et 23, respectivement, du dos de la courroie, comme montré sur la figure 2.

En raison de la dépouille desdites faces, tout contact entre les joncs 28 et les flasques 12, 13 des poulies est évité, nonobstant la tendance de la courroie à "entrer" dans les poulies sous l'effet de tension des câblés 20, de sorte qu'est pratiquement éliminée toute cause possible de fissuration de la matrice au droit des joncs.

La structure de ces derniers, en fibres de verre enrobées de résine époxy, permet en outre d'assurer leur adhérisation satisfaisante à la matrice de caoutchouc tout en conférant à la courroie de bonnes caractéristiques mécaniques et thermiques, indispensables pour un fonctionnement sûr et sans aléas à des températures d'emploi qui peuvent être de l'ordre de 120°C.

Dans la forme de réalisation montrée sur la figure 1, le dos de la courroie est découpé transversalement, suivant des crans 35₁, 35₂... etc... et les joncs 28 sont régulièrement disposés dans les crans 35, soit avec un jonc dans chaque cran, soit avec un pas différent, choisi en fonction de la longueur nominale de la courroie 10.

Dans la forme de réalisation montrée sur la figure 3, les joncs rigides 28 sont également régulièrement disposés suivant une couche noyée dans le dos de la courroie mais celle-ci est alors à face externe 40 démunie de crantage et recouverte d'un tissu 41.

Dans la réalisation montrée sur la figure 4, le dos de la courroie est cranté, comme dans la réalisation selon la figure 1, mais les joncs rigides 28 sont disposés dans le dos suivant deux couches, les joncs 28a d'une couche étant décalés longitudinalement et radialement par rapport aux joncs 28b d'une autre couche, et ainsi suivant une disposition quelque peu en quinconce.

De bons résultats ont été obtenus pour la transmission d'une puissance d'environ 15 Kw avec des renforts rigides 28 tels que définis et commercialisés par la Société COUSIN Frères à WERVICQ (FRANCE) sous le nom "Jonc JT".

Pour la puissance indiquée ci-dessus, la durée de vie d'une courroie selon l'invention est d'environ 350 heures alors que celle d'une courroie usuelle comparable est de 75 heures seulement.

La fabrication d'une courroie selon l'invention est réalisée de façon analogue à celle d'une courroie usuelle, c'est-à-dire en confectionnant un manchon sur un mandrin et en découpant ledit manchon à l'aide d'outils qui l'attaquent suivant une incidence de, par exemple, + 13° pour donner aux flancs de la courroie l'angle voulu de 26°, d'une part, et la dépouille des faces latérales du dos, d'autre part. Dans une telle fabrication, on dispose sur un mandrin une fine couche d'élastomère ou une première couche de tissu caoutchouté puis on rapporte ensuite de nouvelles couches d'élastomère, la couche de câblés, de nouvelles épaisseurs d'élastomère, les joncs rigides, à nouveau de l'élastomère et le tissu caoutchouté formant la face externe de la courroie, l'ensemble étant ensuite vulcanisé puis découpé.

## Revendications

1. Courroie de transmission de puissance du type trapézoïdal comprenant un corps formé d'une matrice en élastomère dans laquelle est noyée une couche de câblés en matières textiles, naturelles ou synthétiques, servant de support de traction, avec des renforts à base de filaments dirigés sensiblement transversalement par rapport à la courroie, caractérisée en ce que lesdits renforts (28) sont des joncs rigides composites en fibres de verre enrobées de résine époxy disposés exclusivement dans la partie de dos de la courroie, laquelle est limitée latéralement par deux faces (22, 23) en dépouille pour éviter tout contact desdits renforts avec les flasques (12, 13) des poulies (11) avec lesquelles coopère la courroie.

2. Courroie selon la revendication 1, caractérisée en ce que les joncs (28) ont un diamètre compris entre 0,5 et 3 mm et sont disposés dans le dos de la courroie suivant une ou plusieurs couches (28a, 28b).

3. Courroie selon la revendication 1, caractérisée en ce que la matrice enferme des fibres courtes pour accroître sa résistance aux efforts de compression latéraux et en ce que sa face externe (21) de même que sa face interne (19) sont revêtues, chacune, d'au moins une couche de tissu caoutchouté (24, 25).

4. Courroie selon l'une quelconque des revendications précédentes, caractérisée en ce que la longueur des renforts (28) est sensiblement égale à la largeur du dos de la courroie mesurée entre ses faces latérales (22, 23).

5. Courroie selon l'une quelconque des revendications précédentes, caractérisée en ce qu'elle présente un crantage transversal (26) dans sa partie intérieure.

6. Courroie selon l'une quelconque des revendications précédentes, caractérisée en ce qu'elle présente un crantage transversal (35) sur son dos.

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-1 524 806 (GOODRICH)<br>* Page 1, colonne de droite, ligne 30 - page 2, colonne de gauche, ligne 17; figure 1 * | 1,4,5 | F 16 G 5/06 |
| A | | 2 | |
| Y | EP-A-0 222 637 (HUTCHINSON)<br>* Page 4, lignes 44-56; page 5, lignes 60-62; figures 2,3,4 * | 1,4,5 | |
| A | --- | 3 | |
| Y | US-A-3 968 703 (BELLMANN)<br>* Colonne 2, ligne 62 - colonne 3, ligne 36; colonne 5, lignes 4-44; figure 2 * | 1,4,5,6 | |
| A | --- | 2,3 | |
| Y | FR-A-2 547 005 (CONTINENTAL GUMMI-WERKE)<br>* Page 3, ligne 29 - page 4, ligne 28; figure * | 1,4,5,6 | |
| A | PATENT ABSTRACTS OF JAPAN, vol. 5, no. 61 (M-65)[733], 24 avril 1981; & JP-A-56 14 642 (BANDOO KAGAKU) 12-02-1981 | 1,4 | DOMAINES TECHNIQUES RECHERCHES (Int. Cl.5)<br><br>F 16 G<br>B 29 D |
| A | --- US-A-2 514 429 (WAUGH)<br>* Colonne 2, ligne 37 - colonne 3, ligne 44; figures 4,7 * | 1,3,4,5,6 | |
| A | --- US-A-2 124 668 (FREEDLANDER)<br>* Page 1, colonne de droite, lignes 4-34; figure 1 *<br>--- -/- | 1,3,5,6 | |

Le présent rapport a été établi pour toutes les revendications

| Lieu de la recherche | Date d'achèvement de la recherche | Examinateur |
|---|---|---|
| LA HAYE | 07-02-1990 | BARON C. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 430 500 (FREEDLANDER)<br>* Colonne 3, lignes 10-26,56-63; figures 7,8 *<br>--- | 3,5,6 | |
| D,A | EP-A-0 109 990 (MITSUBOSHI BELTING)<br>----- | 3,5,6 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 07-02-1990 | BARON C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)